(19) Europäisches Patentamt

European Patent Office

Office européen des brevets

(11) EP 3 160 910 B1

(12) FASCICULE DE BREVET EUROPEEN

(45) Date de publication et mention
de la délivrance du brevet:
**29.04.2020 Bulletin 2020/18**

(21) Numéro de dépôt: **15753760.6**

(22) Date de dépôt: **29.06.2015**

(51) Int Cl.:
***C02F 3/00*** *(2006.01)* ***C02F 3/20*** *(2006.01)*

(86) Numéro de dépôt international:
**PCT/IB2015/054868**

(87) Numéro de publication internationale:
**WO 2016/001823 (07.01.2016 Gazette 2016/01)**

(54) **PROCÉDÉ ET INSTALLATION DE TRAITEMENT BIOLOGIQUE D'EAUX USÉES URBAINES OU INDUSTRIELLES PAR VOIE AÉROBIE**

VERFAHREN UND ANLAGE ZUR AEROBEN BIOLOGISCHEN BEHANDLUNG VON STÄDTISCHEM ODER INDUSTRIELLEM ABWASSER

METHOD AND FACILITY FOR AEROBIC BIOLOGICAL TREATMENT OF URBAN OR INDUSTRIAL WASTEWATER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.06.2014 FR 1456147**

(43) Date de publication de la demande:
**03.05.2017 Bulletin 2017/18**

(73) Titulaire: **Suez International
92040 Paris la Défense Cedex (FR)**

(72) Inventeurs:
• **GRAVELEAU, Laure
F-94260 Fresnes (FR)**

• **SECONDAT, Marie
F-78400 Chatou (FR)**

(74) Mandataire: **IPAZ
16, rue Gaillon
75002 Paris (FR)**

(56) Documents cités:
**US-A1- 2012 305 478    US-A1- 2013 199 997
US-A1- 2013 256 217    US-A1- 2014 069 864
US-A1- 2014 091 035    US-A1- 2014 231 360
US-B1- 6 987 011**

**Description**

L'invention est relative à un procédé de traitement biologique d'eaux usées urbaines ou industrielles par voie aérobie pour l'élimination de la matière carbonée biodégradable et l'oxydation de l'ammonium.

Le traitement par voie aérobie est assuré grâce à un apport d'air ou d'oxygène. Par la suite, pour simplifier, seul un apport d'air sera mentionné, mais cette expression est à comprendre comme englobant également un apport d'oxygène.

L'invention concerne un procédé selon lequel l'eau à traiter s'écoule en flux piston entre une entrée et une sortie, et les apports d'air sont répartis au-dessous de l'écoulement d'eau et sont alimentés par au moins une source d'air, le débit de cette source étant modulé selon au moins un paramètre de traitement.

La configuration de traitement en flux piston entraîne un gradient de concentration en pollution carbonée et en ammonium entre l'entrée et la sortie d'un réacteur ou bassin biologique, généralement de forme rectangulaire allongée, dans lequel s'effectue le traitement. Il s'agit d'une différence notable avec un traitement en mélange intégral où la concentration en tout point du bassin est identique.

La régulation classique de l'apport en air pour une configuration en flux piston n'est pas totalement satisfaisante et demande à être améliorée. Souvent, la régulation est effectuée sur la base de la concentration en oxygène résiduel mesurée à la sortie de la zone de traitement.

De manière optimale, l'apport en air total fourni pendant le temps de traitement doit correspondre aux besoins en air pour assurer le traitement. Dans la plus grande partie de la zone de traitement, l'ensemble de l'oxygène apporté est consommé par la biomasse, assurant ainsi l'élimination de carbone et l'oxydation de l'ammonium. Un résiduel en oxygène en fin de traitement est une garantie que l'apport en air a été suffisant et que l'ensemble de la matière oxydable a pu être traité.

La difficulté résulte du fait que la quantité de matières oxydables varie continuellement si bien que la quantité d'air à fournir doit être ajustée en continu. La concentration en oxygène en fin de traitement, utilisée de manière classique pour réguler l'apport en air, est un paramètre fortement variable dans le temps puisqu'à partir du moment où la matière oxydable a été totalement traitée, la concentration en oxygène passe d'une valeur proche de 0 à 8 mg/L en quelques dizaines de minutes.

Aussi, en fonction de la charge en matières oxydables, on risque d'avoir des profils de concentration en oxygène, suivant la longueur du bassin de traitement, qui ne sont pas satisfaisants. En situation de faible charge, l'apport en air peut être trop important, ce qui peut se traduire par une concentration élevée en oxygène sur plus de la moitié de la zone de traitement ; il y a alors une dépense inutile en fourniture d'air.

En situation de forte charge, l'apport en air peut être trop faible, ce qui ne permet pas de mesurer une concentration en oxygène résiduel en fin de zone de traitement. Ce traitement a été insuffisant, et n'a pas permis d'éliminer la majeure partie des matières oxydables.

Il apparaît donc que la régulation généralement utilisée n'est pas complètement satisfaisante dans la mesure où l'apport en air est ajusté en fonction de la concentration résiduelle en oxygène, constatée en fin de traitement. Il s'agit d'une régulation a posteriori qui ne permet pas d'anticiper les variations de charge à traiter. Le débit d'air est ajusté en fonction du résiduel d'oxygène constaté sur l'eau de sortie. La forte variation de la concentration en oxygène en fin de traitement entraîne par ailleurs des variations importantes des débits d'air demandés, phénomène qui entraîne des à-coups dans la production ou la distribution de l'air, particulièrement dans le cas où plusieurs files de traitement sont alimentées en air par une source commune.

US-A-2014/069864 **décrit un procédé de traitement des eaux usées dans lequel on utilise deux unités de contrôle pour générer des instructions d'augmentation, diminution et maintien de la concentration en oxygène dissous dans le réacteur.**

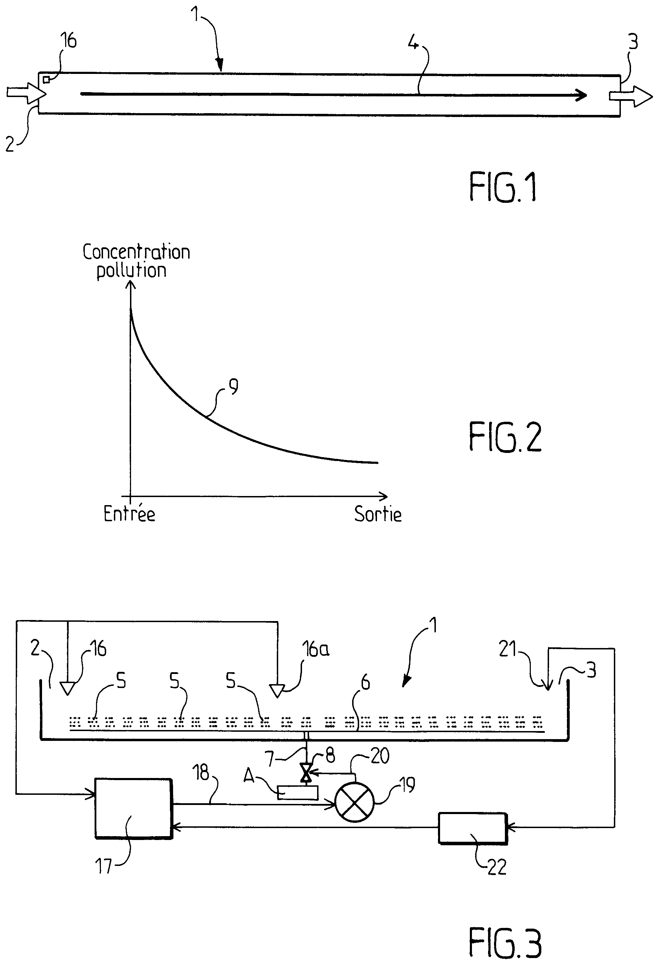

**Le document** US-A-2012/305478 **concerne un procédé de traitement biologique d'eaux usées pouvant mettre en œuvre un réacteur de type flux piston afin de transformer/enlever la matière carbonée et l'ammonium (Figure 2), à l'aide du contrôle du flux d'entrée de l'effluent et du volume d'un réacteur A permettant uniquement le transfert de la biomasse et des eaux usées à un réacteur B.**

L'invention a pour but, surtout, de fournir un procédé de traitement biologique en flux piston qui ne présente plus, ou à un degré moindre, les inconvénients rappelés ci-dessus, et qui permet, notamment, de mieux maîtriser les variations de l'apport en air pour assurer l'élimination de la matière carbonée biodégradable et l'oxydation de l'ammonium. Le coût de mise en œuvre du procédé doit en outre rester acceptable comparé au coût d'un procédé classique.

Selon l'invention, le procédé de traitement biologique d'eaux usées urbaines ou industrielles par voie aérobie, pour l'élimination de la matière carbonée biodégradable et l'oxydation de l'ammonium, procédé selon lequel l'eau à traiter s'écoule en flux piston entre une entrée et une sortie, et des apports d'air par des buses distribuées selon la longueur du bassin sont répartis au-dessous de l'écoulement d'eau et sont alimentés par au moins une source d'air, le débit de cette source étant modulé selon au moins un paramètre du traitement, la concentration en nutriment (carbone et/ou NH4) de l'eau à traiter étant mesurée par un capteur en continu à l'entrée, le débit des apports d'air étant modulé selon la concentration en nutriment (carbone et/ou NH4) mesurée, et la concentration en nutriment (carbone et/ou NH4) de l'eau en cours de traitement étant mesurée par un capteur en un point du parcours du traitement, en particulier à mi-parcours, de manière à intégrer le taux d'élimination effectivement réalisé pour moduler le débit d'air, caractérisé en ce que le calcul du débit d'air est effectué par une unité de calcul selon :

- une formule D1 prenant en compte la concentration en nutriment (carbone et/ou NH4) à l'entrée du flux piston NutrEntrée, et en un point du traitement NutrParcours, notamment au milieu

$$D1 \rightarrow \quad Qair = Qmin + B*NutrEntrée + C \ (NutrParcours - E*NutrEntrée)$$

avec,

concentration en nutriment en mg/L
Qmin en Nm3/h,
Qmin étant compris entre 2 et 6 Nm3/h/m2 * surface de bassin aéré en m2
B en Nm3/h/mg/L,
B étant compris entre 400 et 1000, avantageusement égal à 700
C en Nm3/h/mg/L
C étant compris entre 150 et 600 en Nm3/h/mg/L, selon configuration E sans unité, compris entre 0,5 et 0,8

ou
- selon une formule D2 prenant en compte d'une part le débit d'air Qair-1, appliqué à l'instant t-1, et d'autre part la variation pNutrEntrée de concentration en nutriment (carbone et/ou NH4), en fonction du temps, à l'entrée du flux piston, et la variation du taux d'élimination du nutriment (carbone et/ou NH4) sur un point du parcours, en particulier sur la première moitié du flux piston,

$$D2 \rightarrow \quad Qair = Qair\text{-}1 + F*pNutrEntrée + G*p(NutrParcours - E*NutrEntrée)$$

avec

Qair-1 égal au débit d'air appliqué à t-1 (t-1 minute)
pNutrEntrée, la variation de concentration en nutriment à l'entrée du flux piston
p(NutrParcours - E*NutrEntrée), la variation du taux d'élimination du nutriment (carbone et/ou NH4) en un point du parcours, notamment sur la première moitié du flux piston
F en Nm3/h/mg/L/min, F étant compris entre 6000 et 12000, avantageusement égal à 8000,
G en Nm3/h/mg/L/min, G étant compris entre 1 et 10, avantageusement égal à 5,
E sans unité, compris entre 0,5 et 0,8,
l'unité de calcul fournissant en sortie une instruction à un circuit, convertissant l'information provenant de la sortie en un signal de commande de régulation de l'apport d'air dans les buses soit par une vanne, soit par modulation du débit de la source d'air.

Le calcul du débit d'air est effectué selon les deux formules (D1) et (D2), au choix de l'opérateur, la formule D2 permettant un meilleur ajustement du débit d'air apporté.
Avantageusement, la concentration en oxygène de l'eau est mesurée en fin de traitement et la régulation du débit d'air est complétée par l'ajout d'un facteur de correction basé sur cette concentration en oxygène
Une gamme de concentration en oxygène peut être déterminée (Oxyg min / Oxyg max) et lorsque la valeur mesurée de la concentration en oxygène est hors de cette gamme (02 mesurée > Oxyg max ou 02 mesurée < Oxyg min) le débit d'air Qair calculé est corrigé :
Lorsque le débit d'air (Qair) est calculé selon la formule (D1), on peut appliquer un facteur de correction O.Ox de manière incrémentale, en particulier à chaque mesure où la concentration en O2 mesurée<Oxyg min, on ajoute O.Ox d'incrément au facteur de correction k, le débit d'air devenant ainsi

$$Qair = k \,[Qmin + B*NutrEntrée + C \,(NutrParcours - E*NutrEntrée)]$$

avec k initial=1
k étant sans unité

Dans le cas où O2 mesurée>Oxyg max, on décrémente de O.Ox le facteur de correction k.

Lorsque le débit d'air (Qair) est calculé selon la formule (D2), on peut appliquer un facteur de correction fixe à chaque mesure de la concentration en oxygène, en particulier à chaque mesure où la concentration en O2 mesurée<Oxyg min, on applique une correction de (1+0.0x) et pour chaque mesure où O2mesurée>Oxyg max on applique une correction de (1-0.0x), le débit d'air devenant ainsi :

$$Qair = (1+0.0x) \,(ou \,1-0.0x) \,*[Qair\text{-}1 + F*pNutrEntrée + G*p(NutrParcours - E*NutrEntrée)]$$

avec x sans unité.

Si le débit d'air calculé (selon D1 ou D2) est égal à Qmin, on n'applique pas un décrément et de la même manière, si le débit d'air calculé est égal à Qmax, on n'incrémente pas le facteur de correction.

L'invention est également relative à Installation de traitement biologique d'eaux usées urbaines ou industrielles par voie aérobie, pour la mise en œuvre du procédé défini précédemment, comportant un réacteur à flux piston, par voie aérobie, pour l'élimination de la matière carbonée biodégradable et l'oxydation du nutriment (carbone et/ou NH4), l'eau à traiter s'écoulant entre une entrée et une sortie, et des apports d'air par des buses distribuées selon la longueur du bassin, au-dessous de l'écoulement d'eau et alimentés par au moins une source d'air A, le débit de cette source étant modulé selon au moins un paramètre du traitement,

caractérisée en ce qu'elle comporte à l'entrée du réacteur/bassin, un capteur permettant une estimation en continu de la concentration en nutriment (carbone et/ou NH4) de l'eau, et une unité de calcul recevant l'information du capteur et apte à commander le débit des apports d'air, et en ce qu'elle comporte sur le parcours du flux piston, en particulier à mi-parcours, un capteur permettant une estimation en continu de la concentration en nutriment (carbone et/ou NH4) de l'eau en ce point du parcours, le capteur 16a étant relié à l'unité de calcul de manière à intégrer le taux d'élimination effectivement réalisé pour moduler le débit d'air,

l'unité de calcul fournissant en sortie une instruction à un circuit, convertissant l'information provenant de la sortie en un signal de commande de régulation de l'apport d'air dans les buses soit par une vanne, soit par modulation du débit de la source d'air.

L'installation comporte sur le parcours du flux piston, en particulier à mi-parcours, un capteur permettant une estimation en continu de la concentration en nutriment (carbone et/ou NH4) de l'eau en ce point du parcours, le capteur étant relié à l'unité de calcul de manière à intégrer le taux d'élimination effectivement réalisé pour moduler le débit d'air.

L'unité de calcul est programmée pour calculer le débit d'air suivant au moins deux formules D1, D2.

De préférence, l'installation comporte à la sortie du flux piston une sonde de mesure de la concentration en oxygène dans l'eau, cette sonde étant reliée à l'unité de commande, pour que la régulation du débit d'air soit complétée par l'ajout d'un facteur de correction (k) basé sur cette concentration en oxygène.

Les capteurs de la concentration en nutriment (carbone et/ou NH4) peuvent être des capteurs ISE.

L'invention permet d'assurer une régulation a priori de l'aération de l'écoulement en flux piston basée sur la charge à traiter.

En particulier, le développement de capteurs ISE (Ion Selective Electrode) permet une estimation en continu de la concentration en nutriment (carbone et/ou NH4) de l'eau. L'utilisation de cette information permet de prévoir une partie de charge à traiter (charge azotée), et est utilisée pour la régulation de l'air. Tout autre moyen de mesure en continu ou semi-continu du nutriment (carbone et/ou NH4) peut être utilisé.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :

Fig. 1 est une vue schématique de dessus d'un bassin de traitement biologique d'eaux usées en flux piston.
Fig. 2 est un diagramme illustrant la variation de la concentration en pollution carbonée et en nutriment (carbone et/ou NH4), portée en ordonnée, en fonction du parcours du flux piston entre l'entrée et la sortie, porté en abscisse.
Fig. 3 est un schéma d'une installation mettant en œuvre le procédé de l'invention.
Fig. 4 est un diagramme illustrant le procédé de l'invention et la variation de la concentration en nutriment (carbone et/ou NH4) en entrée du traitement, de la concentration en oxygène en fin de traitement, du débit d'air calculé et du débit d'air apporté, portés en ordonnée, en fonction du temps porté en abscisse.

Fig. 5 est un diagramme semblable à celui de Fig. 4 mais dans le cas d'une régulation classique basée sur la concentration en oxygène en fin de traitement.

Fig. 6 est un diagramme illustrant la variation de la concentration en matières oxydables portée en ordonnée en fonction du parcours du flux piston, porté en abscisse, ainsi que la variation de la concentration en oxygène dans le cas d'un apport en air suffisant.

Fig. 7 est un diagramme semblable à celui de Fig. 6, dans le cas d'un apport en air trop important, et

Fig. 8 est un diagramme semblable à celui de Fig. 6 dans le cas d'une forte charge en matières oxydables, avec un apport en air trop faible.

En se reportant à Fig. 1 des dessins, on peut voir une représentation schématique d'un bassin 1 de forme générale rectangulaire allongée pour un traitement biologique d'eaux usées urbaines ou industrielles réalisé par voie aérobie, en flux piston. L'eau à traiter pénètre dans le bassin 1 par une entrée 2 et est évacuée par une sortie 3, comme indiqué par des flèches. Le parcours de l'eau dans le bassin 1 est essentiellement rectiligne comme indiqué par la flèche 4, les lignes de courant étant toutes parallèles à cette flèche, les sections transversales se déplaçant parallèlement à elles-mêmes, comme dans le cas où le fluide est poussé par un piston, sans qu'il y ait mélange entre des zones échelonnées suivant la direction longitudinale du bassin 1.

Des apports d'air sont répartis sous le flux piston, dans le fond du bassin 1 comme illustré sur Fig. 3 par des buses 5 distribuées suivant la longueur du bassin. Les buses 5 sont branchées en parallèle sur une même conduite 6, orientée suivant la longueur du bassin et alimentée par une canalisation 7 en air provenant d'une source A, notamment un surpresseur. Une régulation du débit d'air de la canalisation 7 est prévue. Cette régulation peut être assurée par une vanne 8 commandée de manière appropriée. En variante, la régulation pourrait être assurée en modulant le débit de la source A.

La régulation est assurée de manière globale pour l'ensemble des buses 5 car une commande séparée de chacune des buses 5 entraînerait une complexité d'installation et d'exploitation trop coûteuse.

La concentration en pollution carbonée et en ammonium de l'eau, qui se déplace dans le bassin 1 entre l'entrée et la sortie, évolue comme schématiquement illustrée par la courbe 9 de Fig. 2, sur laquelle la concentration en pollution est portée en ordonnée tandis que la position suivant la longueur du bassin est portée en abscisse. La concentration, maximale à l'entrée 2, diminue progressivement sous l'effet du traitement aérobie grâce à l'apport d'air qui permet l'élimination de la matière carbonée biodégradable et l'oxydation du nutriment (carbone et/ou NH4). Dans le traitement en flux piston, on observe donc un gradient de concentration entre le point d'arrivée de l'eau et la sortie comme illustré par la courbe 9.

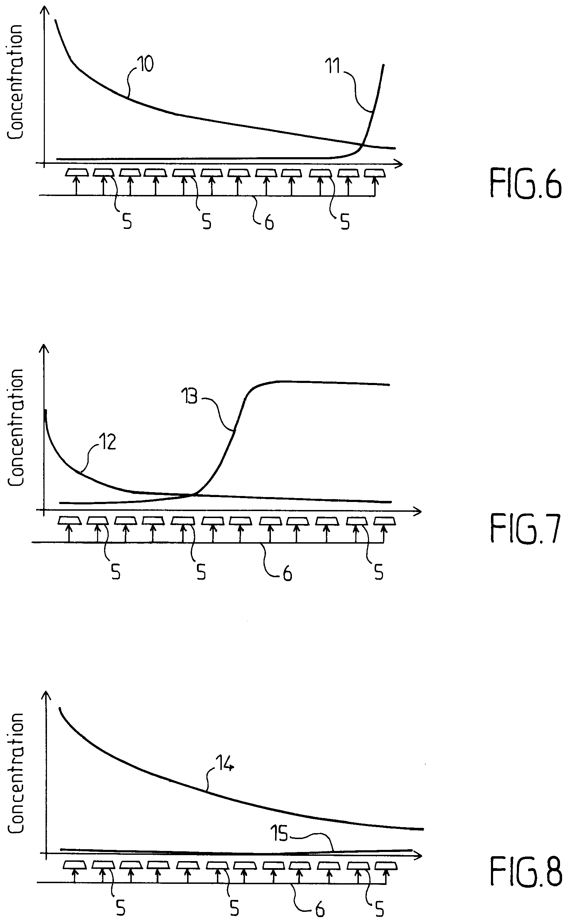

La difficulté d'un traitement en flux piston est d'assurer le traitement de la totalité de la pollution quelle que soit la charge de l'eau usée en entrée du bassin 1, en évitant un excès d'apport en air entraînant des dépenses inutiles. Le signal de fin de traitement de pollution correspond à une augmentation de la concentration en oxygène dans l'eau. En effet, à partir de l'instant où la matière oxydable a été totalement traitée, la concentration en oxygène passe d'une valeur proche de 0 à 8 mg/L en quelques dizaines de minutes. Ceci est illustré par le schéma de Fig. 6 sur lequel est représentée, par la courbe 10, la variation de la concentration en pollution portée en ordonnée en fonction de la position suivant la longueur du réacteur 1 selon la courbe 10. La variation de la concentration en oxygène de l'eau est illustrée par la courbe 11.

Le schéma de Fig. 6 illustre le but à atteindre quelle que soit la charge : l'augmentation de la concentration en oxygène ne se produit qu'au voisinage de la sortie du flux piston, et la concentration en matières oxydables a atteint une valeur considérée comme minimale. Dans ce cas, l'apport en air a été juste suffisant pour traiter toute la pollution.

Le schéma de Fig. 7 illustre le cas où l'apport en air a été trop important, par exemple en raison d'une faible charge en matières oxydables de l'eau usée à traiter. La courbe 12 représente la variation de la concentration en pollution, tandis que la courbe 13 représente la variation de la concentration en oxygène. L'augmentation de la concentration en oxygène se produit sensiblement à mi-longueur du bassin alors que la concentration en pollution a atteint pratiquement sa valeur minimale. Dans ce cas, l'apport trop important en air entraîne une dépense inutile.

Fig. 8 illustre le cas où l'apport en air est insuffisant pour que le traitement de la pollution soit achevé en sortie du bassin à flux piston. La courbe 14 de concentration en pollution reste à un niveau relativement élevé en sortie du bassin tandis que la courbe 15 de concentration en oxygène reste à un niveau voisin de 0 du fait que toute la matière oxydable n'a pas été traitée. Cette situation peut correspondre à un cas de forte charge en matières oxydables.

A titre indicatif, l'eau à traiter parcourt le bassin ou réacteur 1 en quelques heures.

Selon l'invention, un capteur 16 permettant une estimation en continu de la concentration en nutriment (carbone et/ou NH4) de l'eau est installé à l'entrée 2 du bassin en flux piston. L'information fournie par le capteur 16 permet de prévoir une partie de charge à traiter (la charge azotée) et est utilisée pour la régulation de l'air. Tout autre moyen de mesure en continu ou semi-continu du nutriment (carbone et/ou NH4) peut être utilisé. Le capteur 16 est avantageusement du type ISE (Ion Selective Electrode). La régulation de l'apport d'air, selon l'invention, est effectuée a priori en étant basée sur la charge à traiter.

L'information fournie par le capteur 16, comme illustré sur Fig. 3, est envoyée à une unité de calcul 17, en particulier un contrôleur ou un micro-ordinateur, qui fournit en sortie 18 une instruction envoyée à un circuit 19 convertissant l'information provenant de la sortie 18 en un signal de commande de la vanne 8, pour la régulation de l'apport d'air.

De préférence, un autre capteur 16a de la concentration de l'eau en nutriment (carbone et/ou NH4) est disposé dans le bassin 1 sur le parcours de traitement, à distance de l'entrée 1, sensiblement à mi-parcours du traitement, c'est-à-dire à mi-longueur du bassin 1. La concentration en nutriment (carbone et/ou NH4) mesurée à cet endroit par le capteur 16a permet d'intégrer le taux d'élimination effectivement réalisé.

L'unité de commande 17 est programmée pour déterminer a priori le débit d'air nécessaire.

Les paramètres utilisés sont les suivants :

- concentration en nutriment à l'entrée (mg/L) : NutrEntrée
- concentration en nutriment en un point du trajet (mg/L) NutrParcours
- concentration en oxygène en sortie (mg/L),
- débit d'air appliqué (Nm$^3$/h) : Qair.

L'unité 17 est programmée pour mettre en œuvre au moins deux modes de calcul du débit d'air nécessaire.

Selon les cas, cette détermination a priori des besoins en air peut être complétée par une correction, a posteriori, basée sur la concentration en oxygène de l'eau mesurée en fin de traitement par une sonde 21 disposée au voisinage de la sortie 2. L'information de la sonde 21 est envoyée à l'unité 17 sous forme d'une consigne 22 de concentration en oxygène.

Les deux modes de calcul pouvant être utilisés pour déterminer a priori le débit d'air nécessaire Q air sont exposés ci-après.

Selon une première formule D1 :

$$D1 \rightarrow Qair = Qmin + B*NutrEntrée + C (NutrParcours - E*NutrEntrée)$$

avec,

Qmin (débit minimum) en Nm3/h
B en Nm3/h/mg/L
C en Nm3/h/mg/L
E sans unité

Selon une deuxième formule D2 :

$$D2 \rightarrow Qair = Qair\text{-}1 + F*pNutrEntrée + G*p(NutrParcours \text{-}E*NutrEntrée)$$

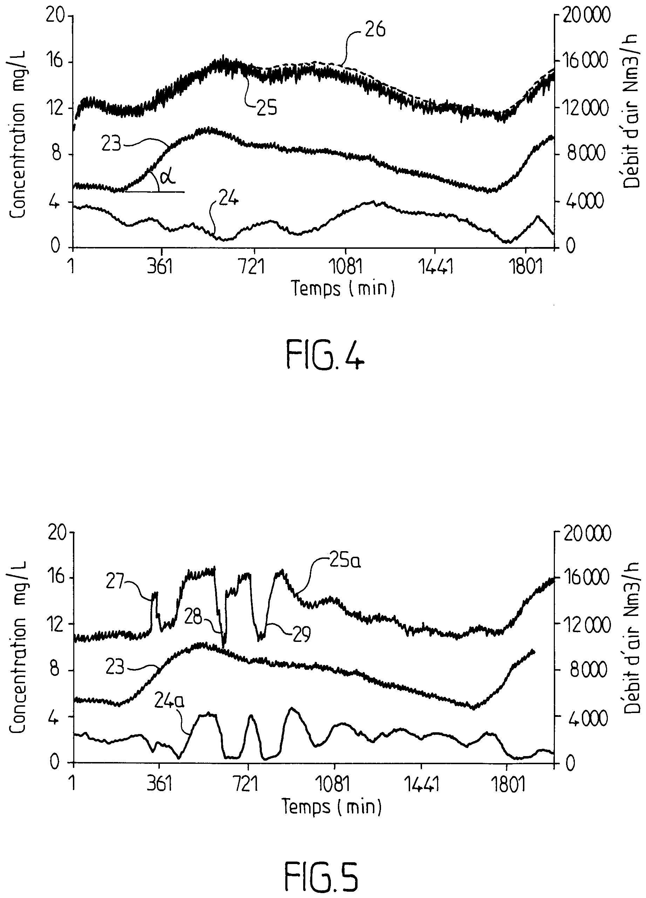

avec Qair-1, le débit d'air appliqué à l'instant t-1 (t - 1minute, généralement 10 minutes)
pNutrEntrée, la variation de concentration en nutriment à l'entrée du flux piston ; pNutrEntrée correspond à la pente, soit la tangente de l'angle $\alpha$ (Fig.4) d'inclinaison de la courbe illustrant la variation de concentration à l'entrée en fonction du temps ;
p(NutrMilieu - E*NutrEntrée), la variation du taux d'élimination du nutriment (carbone et/ou NH4) NH4 sur un premier parcours du flux piston
F en Nm3/h/mg/L/min
G en Nm3/h/mg/L/min
E sans unité

De préférence, pour D1 et D2, NutrParcours est mesurée au milieu du trajet et devient NutrMilieu.

Selon les besoins, cette détermination a priori des besoins en air peut être complétée par une correction a posteriori, basée sur la concentration en oxygène mesurée en fin de traitement. L'objectif de la régulation est de déterminer a priori les besoins en air et d'ajuster cette estimation en fonction de l'oxygène résiduel - les valeurs choisies pour les coefficients de régulation, correspondant aux différentes lettres des formules D1 et D2, sont adaptées à cet objectif.

Le choix du mode de calcul du débit d'air à appliquer se fait par l'opérateur, la formule D2 présentant un meilleur ajustement du débit d'air apporté.

Une gamme de concentration en oxygène est déterminée en fonction des conditions d'aération nécessaires pour le traitement (Oxyg min / Oxyg max) par exemple une concentration minium en sortie de traitement de 0.75 mg/L et une concentration maximum désirée de 2 mg/L) et lorsque la valeur mesurée de la concentration en oxygène est hors de cette gamme (02 mesurée > Oxyg max ou 02 mesurée < Oxyg min) le débit d'air Qair calculé (selon une des deux formules précédentes D1, D2) est corrigé ainsi :

- Si Qair est calculé selon la formule D1, on applique un facteur de correction de manière incrémentale. Par exemple à chaque mesure où la concentration en O2 mesurée<Oxyg min, on ajoute O.Ox d'incrément à un facteur de correction k. Le débit d'air devient ainsi

$$Qair = k\,[Qmin + B{*}NutrEntr\acute{e}e + C\,(NutrParcours - E{*}NutrEntr\acute{e}e)]$$

avec k initial=1
k étant sans unité

Si la concentration en O2 mesurée > Oxyg max, on retranche O.Ox comme décrément du facteur de correction k.

- Si Qair est calculé selon la formule D2, on applique un facteur de correction fixe à chaque mesure de la concentration en oxygène.
Par exemple, à chaque mesure où la concentration en O2 mesurée < Oxyg min, on applique une correction de (1+0.0x) et pour chaque mesure où O2mesurée>Oxygmax on applique une correction de (1-0.0x). Le débit d'air devient ainsi

$$Qair = (1+0.0x)\ (ou\ 1-0.0x)\ {*}[Qair\text{-}1 + F{*}pNutrEntr\acute{e}e + G{*}p(NutrParcours - E{*}NutrEntr\acute{e}e)]$$

avec x sans unité

Si de le débit d'air calculé (selon D1 ou D2) est égal à Qmin, on n'applique pas un décrément et de la même manière, si le débit d'air calculé est égal à Qmax, on n'incrémente pas le facteur de correction.

Des essais ont été réalisés sur une station existante, à 15°C, traitant une eau résiduaire urbaine à 190 mg/L en DBO et 36 mg/L en NTK (azote Kjekdahl) en valeur moyenne. Le volume d'une zone de traitement est de 1700 m3 composé pour 1/3 du volume d'une zone anoxie et pour 2/3 du volume d'une zone aérée. Le débit moyen admis sur la zone est de 2700 m3/h d'eau brute et la concentration en MES (matières en suspension) est de 4 g/L.

Les paramètres suivants ont été utilisés pour la régulation selon le premier mode de calcul :

Qmin=9000 Nm3/h correspondant au besoin en air pour maintenir en suspension la biomasse. Il est de l'ordre de 2 à 6 Nm3/h/ m2 de bassin aéré.

B=700 est déterminé en fonction des données du projet (charge admise et volume des ouvrages) - sa valeur est comprise entre 400 et 1000 selon les configurations retenues

C=400 est déterminé en fonction des données du projet (charge admise et volume des ouvrages) - sa valeur est comprise entre 150 et 600 selon les configurations retenues et

E=0.8 correspond à la part du nutriment (carbone et/ou NH4) non traité dans la première partie du flux piston. Il est déterminé en fonction des données du projet [charge admise (concentration et ratio DCO/NT ou azote total) et volume des ouvrages] ; sa valeur est comprise entre 0.5 et 0.8 selon les configurations retenues

x=0.02 soit une modulation de 2% du débit d'air calculé a priori, et une variation de l'ordre de 200 Nm3/h à chaque mesure de l'oxygène en fin de traitement.

Les paramètres F et G dans le cas de l'utilisation de la formule D2 prendront des valeurs de F=8000, déterminé en fonction des données du projet (charge admise et volume des ouvrages) - sa valeur est comprise entre 6000 et 12 000 selon les configurations retenues,
et G=5, déterminé en fonction des données du projet (charge admise et volume des ouvrages) - sa valeur est comprise entre 1 et 10 selon les configurations retenues.

Les résultats pour l'exemple considéré sont représentés sur Fig. 4. La courbe 23 correspond à l'évolution de la concentration en ammonium NH4 à l'entrée du réacteur. La concentration en ammonium est portée sur l'échelle des ordonnées à gauche en mg/L. Le temps porté en abscisse est exprimé en minutes. La courbe 24 inférieure correspond à la concentration en oxygène à la sortie du réacteur 1, également exprimée en mg/L.

La courbe 25 correspond au débit d'air apporté exprimé en Nm3/h, selon la graduation de l'axe des ordonnées situées à droite, et la courbe 26 en tirets correspond au débit d'air calculé par la régulation selon l'invention.

On remarque que la régulation permet de suivre correctement les variations de la charge à traiter sans générer d'à-coups de besoins en air, les variations étant lissées.

Fig. 5 illustre, pour le même exemple d'eau à traiter, les courbes obtenues avec une régulation classique basée sur la concentration en oxygène de l'eau en sortie 3 du bassin de traitement. La courbe 23 de l'évolution de la concentration en ammonium est identique à celle de Fig. 4. Par contre, la courbe 25a du débit d'air fait apparaître des variations brusques, correspondant à des à-coups sous forme de pics 27 et de vallées 28, 29. La courbe 24a de la concentration en oxygène en sortie du réacteur présente également des à-coups sensiblement en correspondance de ceux de la courbe 25a.

De telles variations brusques sont nuisibles à l'installation ainsi qu'au traitement, et l'invention permet de les éviter.

L'invention est définie par les revendications ci-dessous.

La solution de l'invention offre notamment les avantages suivants:

- Simplicité d'installation et de mise en route - un nombre limité de paramètres est à déterminer sur la base des données de dimensionnement,
- Les besoins en air évoluent de manière progressive ce qui permet aux équipements de production d'air (surpresseur, vannes de régulation, centrale d'air) de fonctionner facilement en limitant les situations de blocage ou de surpression et sous-pression, principalement lorsque plusieurs files fonctionnent en parallèle et sollicitent ces équipements de manière « désordonnée »,
- Les besoins en air sont déterminés sur la charge à traiter (régulation a priori) ce qui permet d'anticiper les besoins et donc limite les à-coups de débit et l'énergie consommée.

## Revendications

1. Procédé de traitement biologique d'eaux usées urbaines ou industrielles par voie aérobie, pour l'élimination de la matière carbonée biodégradable et l'oxydation de l'ammonium, procédé selon lequel l'eau à traiter s'écoule en flux piston entre une entrée 2 et une sortie 3, et des apports d'air par des buses 5 distribuées selon la longueur du bassin sont répartis au-dessous de l'écoulement d'eau et sont alimentés par au moins une source d'air A, le débit de cette source étant modulé selon au moins un paramètre du traitement, la concentration en nutriment (carbone et/ou NH4) de l'eau à traiter étant mesurée par un capteur 16 en continu à l'entrée 2, le débit des apports d'air étant modulé selon la concentration en nutriment (carbone et/ou NH4) mesurée, et la concentration en nutriment (carbone et/ou NH4) de l'eau en cours de traitement étant mesurée par un capteur16a en un point du parcours du traitement, en particulier à mi-parcours, de manière à intégrer le taux d'élimination effectivement réalisé pour moduler le débit d'air, **caractérisé en ce que** le calcul du débit d'air est effectué par une unité de calcul 17 selon :

   - une formule D1 prenant en compte la concentration en nutriment (carbone et/ou NH4) à l'entrée du flux piston NutrEntrée, et en un point du traitement NutrParcours, notamment au milieu

$$D1 \rightarrow \quad Qair = Qmin + B*NutrEntrée + C (NutrParcours - E*NutrEntrée)$$

   avec,

   concentration en nutriment en mg/L
   Qmin en Nm3/h,
   Qmin étant compris entre 2 et 6 Nm3/h/m2 * surface de bassin aéré en m2
   B en Nm3/h/mg/L,

B étant compris entre 400 et 1000, avantageusement égal à 700
C en Nm3/h/mg/L
C étant compris entre 150 et 600 en Nm3/h/mg/L, selon configuration
E sans unité, compris entre 0,5 et 0,8

ou
- selon une formule D2 prenant en compte d'une part le débit d'air Qair-1, appliqué à l'instant t-1, et d'autre part la variation pNutrEntrée de concentration en nutriment (carbone et/ou NH4), en fonction du temps, à l'entrée du flux piston, et la variation du taux d'élimination du nutriment (carbone et/ou NH4) sur un point du parcours, en particulier sur la première moitié du flux piston,

$$D2 \rightarrow \quad Qair = Qair\text{-}1 + F^*pNutrEntrée + G^*p(NutrParcours - E^*NutrEntrée)$$

avec

Qair-1 égal au débit d'air appliqué à t-1 (t-1minute)
pNutrEntrée, la variation de concentration en nutriment à l'entrée du flux piston
p(NutrParcours - E*NutrEntrée), la variation du taux d'élimination du nutriment (carbone et/ou NH4) en un point du parcours, notamment sur la première moitié du flux piston
F en Nm3/h/mg/L/min, F étant compris entre 6000 et 12000, avantageusement égal à 8000,
G en Nm3/h/mg/L/min, G étant compris entre 1 et 10, avantageusement égal à 5,
E sans unité, compris entre 0,5 et 0,8,
l'unité de calcul 17 fournissant en sortie 18 une instruction à un circuit 19, convertissant l'information provenant de la sortie 18 en un signal de commande de régulation de l'apport d'air dans les buses 5 soit par une vanne 8, soit par modulation du débit de la source d'air A.

2.  Procédé selon la revendication 1, **caractérisé en ce que** la concentration en oxygène de l'eau est mesurée 21 en fin de traitement et la régulation du débit d'air est complétée par l'ajout d'un facteur de correction k basé sur cette concentration en oxygène.

3.  Procédé selon la revendication 2, **caractérisé en ce qu'**une gamme de concentration en oxygène est déterminée (Oxyg min / Oxyg max) et lorsque la valeur mesurée de la concentration en oxygène est hors de cette gamme (O2 mesurée > Oxyg max ou O2 mesurée < Oxyg min) le débit d'air Qair calculé est corrigé.

4.  Procédé selon l'une des revendications 1 et 3, le débit d'air Qair étant calculé selon la formule D1, **caractérisé en ce qu'**on applique un facteur de correction 0,0x de manière incrémentale, en particulier à chaque mesure où la concentration en O2 mesurée<Oxyg min, on ajoute 0,0x d'incrément au facteur de correction k, le débit d'air devenant ainsi

$$Qair = k\,[Qmin + B^*NutrEntrée + C\,(NutrParcours - E^*NutrEntrée)]$$

avec k initial=1
k étant sans unité

dans le cas où O2 mesurée>Oxyg max, on décrémente de 0,0x le facteur de correction k.

5.  Procédé selon l'ensemble des revendications 1 et 3, le débit d'air Qair étant calculé selon la formule D2, **caractérisé en ce qu'**on applique un facteur de correction fixe à chaque mesure de la concentration en oxygène, en particulier à chaque mesure où la concentration en O2 mesurée<Oxyg min, on applique une correction de (1+0,0x) et pour chaque mesure où O2mesurée>Oxyg max on applique une correction de (1-0,0x), le débit d'air devenant ainsi :

$$Qair = (1+0{,}0x)\ (ou\ 1\text{-}0{,}0x)\ ^*[Qair\text{-}1 + F^*pNutrEntrée + G^*p(NutrParcours - E^*NutrEntrée)]$$

avec x sans unité.

**6.** Installation de traitement biologique d'eaux usées urbaines ou industrielles par voie aérobie, pour la mise en œuvre du procédé selon la revendication 1 ou 2, comportant un réacteur à flux piston, par voie aérobie, pour l'élimination de la matière carbonée biodégradable et l'oxydation du nutriment (carbone et/ou NH4), l'eau à traiter s'écoulant entre une entrée 2 et une sortie 3, et des apports d'air par des buses distribuées selon la longueur du bassin, au-dessous de l'écoulement d'eau et alimentés par au moins une source d'air A, le débit de cette source étant modulé selon au moins un paramètre du traitement,
**caractérisée en ce qu'**elle comporte à l'entrée du réacteur/bassin, un capteur 16 permettant une estimation en continu de la concentration en nutriment (carbone et/ou NH4) de l'eau, et une unité de calcul 17 recevant l'information du capteur 16 et apte à commander le débit des apports d'air, et **en ce qu'**elle comporte sur le parcours du flux piston, en particulier à mi-parcours, un capteur 16a permettant une estimation en continu de la concentration en nutriment (carbone et/ou NH4) de l'eau en ce point du parcours, le capteur 16a étant relié à l'unité de calcul 17 de manière à intégrer le taux d'élimination effectivement réalisé pour moduler le débit d'air,
l'unité de calcul 17 fournissant en sortie 18 une instruction à un circuit 19, convertissant l'information provenant de la sortie 18 en un signal de commande de régulation de l'apport d'air dans les buses 5 soit par une vanne 8, soit par modulation du débit de la source d'air A.

**7.** Installation selon la revendication 6 , **caractérisée en ce que** l'unité de calcul 17 est programmée pour calculer le débit d'air suivant au moins deux formules D1 et D2.

**8.** Installation selon l'une quelconque des revendications 6 à 7, **caractérisée en ce qu'**elle comporte à la sortie 3 du flux piston une sonde 21 de mesure de la concentration en oxygène dans l'eau, cette sonde étant reliée à l'unité de commande 17, pour que la régulation du débit d'air soit complétée par l'ajout d'un facteur de correction k basé sur cette concentration en oxygène.

**9.** Installation selon l'une quelconque des revendications 6 à 8, **caractérisée en ce que** les capteurs de la concentration en nutriment (carbone et/ou NH4) sont des capteurs ISE.

**Patentansprüche**

**1.** Verfahren zur aeroben biologischen Behandlung von kommunalen oder industriellen Abwässern zur Beseitigung von biologisch abbaubarem kohlenstoffhaltigen Material und zur Oxidation von Ammonium, wobei gemäß dem Verfahren das zu behandelnde Wasser in Kolbenströmung zwischen einem Einlass 2 und einem Auslass 3 fließt und Luftzutritte durch die Düsen 5, die nach der Länge des Beckens verteilt sind, unterhalb des Wasserstroms verbreitet sind und durch wenigstens eine Luftquelle A gespeist werden, wobei der Durchsatz dieser Quelle gemäß wenigstens einem Parameter der Behandlung moduliert wird, wobei die Konzentration an Nährstoffen (Kohlenstoff und/oder NH4) in dem zu behandelnden Wasser durch einen Sensor 16 am Einlass 2 kontinuierlich gemessen wird, wobei der Durchsatz des Luftzustroms gemäß der gemessenen Konzentration an Nährstoffen (Kohlenstoff und/oder NH4) moduliert wird und die Konzentration an Nährstoffen (Kohlenstoff und/oder NH4) in dem Wasser im Verlaufe der Behandlung durch einen Sensor 16a an einem Punkt des Behandlungsverlaufs gemessen wird, insbesondere in der Mitte des Verlaufs, um den Beseitigungsgrad, der effektiv realisiert wird, um den Luftdurchsatz zu modulieren, zu integrieren, **dadurch gekennzeichnet, dass** die Berechnung des Luftdurchsatzes durch eine Recheneinheit 17 erfolgt gemäß:

- einer Formel D1, die die Konzentration an Nährstoffen (Kohlenstoff und/oder NH4) am Einlass der Kolbenströmung NutrEinlass und an einem Punkt der Behandlung NutrVerlauf berücksichtigt, insbesondere in der Mitte:

$$D1 \rightarrow QLuft = Qmin + B*NutrEinlass + C (NutrVerlauf - E*NutrEinlass)$$

mit

der Konzentration an Nährstoffen in mg/l;
Qmin in Nm3/h;
wobei Qmin zwischen 2 und 6 Nm3/h/m2 * Oberfläche des belüfteten Beckens in m2 liegt;

B in Nm3/h/mg/l,
wobei B zwischen 400 und 1000 liegt und vorteilhafterweise gleich 700 ist;
C in Nm3/h/mg/l,
wobei C zwischen 150 und 600 liegt, in Nm3/h/mg/l, gemäß Konfiguration;
E dimensionslos ist und zwischen 0,5 und 0,8 liegt; oder

- gemäß einer Formel D2, die einerseits den Luftdurchsatz QLuft-1, der zum Zeitpunkt t-1 angewendet wird, und andererseits die Variation pNutrEinlass der Konzentration an Nährstoffen (Kohlenstoff und/oder NH4) als Funktion der Zeit am Einlass der Kolbenströmung und die Variation des Beseitigungsgrads der Nährstoffe (Kohlenstoff und/oder NH4) an einem Punkt des Verlaufs berücksichtigt, insbesondere in der ersten Hälfte der Kolbenströmung;

$$D2 \rightarrow QLuft = QLuft\text{-}1 + F*pNutrEinlass + G*p(NutrVerlauf - E*NutrEinlass)$$

mit

QLuft-1 gleich dem zu t-1 (t-1 Minute) angewendeten Luftdurchsatz; pNutrEinlass, der Variation der Konzentration an Nährstoffen am Einlass der Kolbenströmung;
p(NutrVerlauf - E*NutrEinlass), der Variation des Beseitigungsgrads der Nährstoffe (Kohlenstoff und/oder NH4) an einem Punkt des Verlaufs, insbesondere in der ersten Hälfte der Kolbenströmung;
F in Nm3/h/mg/l/min, wobei F zwischen 6000 und 12000 liegt und vorteilhafterweise gleich 8000 ist;
G in Nm3/h/mg/l/min, wobei G zwischen 1 und 10 liegt und vorteilhafterweise gleich 5 ist;
E dimensionslos ist und zwischen 0,5 und 0,8 liegt;

wobei die Recheneinheit 17 am Auslass 18 eine Anweisung an eine Schaltung 19 liefert, die von dem Auslass 18 stammende Information in ein Steuersignal zur Regulation des Lufteintrags in den Düsen 5 umrechnet, entweder durch ein Ventil 8 oder durch Modulation des Durchsatzes der Luftquelle A.

2. Verfahren gemäß Anspruch 1, **dadurch gekennzeichnet, dass** die Sauerstoffkonzentration im Wasser am Ende der Behandlung gemessen 21 wird und die Regulation des Lufteintrags durch Hinzufügung eines Korrekturfaktors k auf der Basis dieser Sauerstoffkonzentration ergänzt wird.

3. Verfahren gemäß Anspruch 2, **dadurch gekennzeichnet, dass** ein Bereich der Sauerstoffkonzentration bestimmt wird (Oxyg min/Oxyg max) und, wenn der gemessene Wert der Sauerstoffkonzentration außerhalb dieses Bereichs liegt (O2 gemessen > Oxyg max oder O2 gemessen < Oxyg min), der berechnete Luftdurchsatz QLuft korrigiert wird.

4. Verfahren gemäß einem der Ansprüche 1 und 3, wobei der Luftdurchsatz QLuft gemäß der Formel D1 berechnet wird, **dadurch gekennzeichnet, dass** man einen Korrekturfaktor 0,0x schrittweise anwendet, insbesondere bei jeder Messung, bei der die gemessene Konzentration an O2 < Oxyg min war, man fügt pro Schritt 0,0x zu dem Korrekturfaktor k hinzu, so dass der Luftdurchsatz wie folgt wird:

$$QLuft = k[Qmin + B*NutrEinlass + C (NutrVerlauf - E*NutrEinlass)],$$

wobei k anfänglich = 1 ist;
k dimensionslos ist;

und man in dem Fall, dass O2 gemessen > Oxyg max, den Korrekturfaktor k um 0,0x senkt.

5. Verfahren gemäß der Gesamtheit der Ansprüche 1 und 3, wobei der Luftdurchsatz QLuft gemäß der Formel D2 berechnet wird, **dadurch gekennzeichnet, dass** man bei jeder Messung der Sauerstoffkonzentration einen festen Korrekturfaktor anwendet, insbesondere bei jeder Messung, bei der die gemessene Konzentration an O2 < Oxyg min war, wendet man eine Korrektur von (1+0,0x) an, und bei jeder Messung, bei der O2gemessen > Oxyg max liegt, wendet man eine Korrektur von (1 - 0,0x) an, so dass der Luftdurchsatz wie folgt wird:

$$QLuft = (1 + 0,0x) \text{ (oder } 1-0,0x) \text{ *[}QLuft\text{-}1 + F\text{*}pNutrEinlass + G\text{*}p(NutrVerlauf) - E\text{*}NutrEinlass)],$$

wobei x dimensionslos ist.

6. Anlage zur aeroben biologischen Behandlung von kommunalen oder industriellen Abwässern zur Durchführung des Verfahrens gemäß Anspruch 1 oder 2, umfassend einen Kolbenstromreaktor zur Beseitigung von biologisch abbaubarem kohlenstoffhaltigen Material und zur Oxidation von Nährstoffen (Kohlenstoff und/oder NH4), wobei das zu behandelnde Wasser zwischen einem Einlass 2 und einem Auslass 3 fließt und Luftzutritte durch die Düsen, die nach der Länge des Beckens verteilt sind, unterhalb des Wasserstroms, die durch wenigstens eine Luftquelle A gespeist werden, wobei der Durchsatz dieser Quelle gemäß wenigstens einem Parameter der Behandlung moduliert wird,
**dadurch gekennzeichnet, dass** sie am Einlass des Reaktors/Beckens einen Sensor 16 umfasst, der eine kontinuierliche Schätzung der Konzentration an Nährstoffen (Kohlenstoff und/oder NH4) in dem Wasser ermöglicht, und eine Recheneinheit 17 umfasst, die die Information des Sensors 16 empfängt und den Durchsatz der Luftzutritte steuern kann, und dadurch, dass sie auf dem Verlauf des Strömungskolbens, insbesondere in der Mitte des Verlaufs, einen Sensor 16a umfasst, der eine kontinuierliche Schätzung der Konzentration an Nährstoffen (Kohlenstoff und/oder NH4) in dem Wasser an diesem Punkt des Verlaufs ermöglicht, wobei der Sensor 16a so mit der Recheneinheit 17 verbunden ist, dass der Beseitigungsgrad, der effektiv realisiert wird, um den Luftdurchsatz zu modulieren, integriert wird;
wobei die Recheneinheit 17 am Auslass 18 eine Anweisung an eine Schaltung 19 liefert, die von dem Auslass 18 stammende Information in ein Steuersignal zur Regulation des Lufteintrags in den Düsen 5 umrechnet, entweder durch ein Ventil 8 oder durch Modulation des Durchsatzes der Luftquelle A.

7. Anlage gemäß Anspruch 6, **dadurch gekennzeichnet, dass** die Recheneinheit 17 so programmiert ist, dass sie den Luftdurchsatz gemäß wenigstens zwei Formeln D1 und D2 berechnen kann.

8. Anlage gemäß einem der Ansprüche 6 bis 7, **dadurch gekennzeichnet, dass** sie am Auslass 3 des Strömungskolbens eine Sonde 21 zur Messung der Sauerstoffkonzentration im Wasser umfasst, wobei diese Sonde mit der Steuereinheit 17 verbunden ist, damit die Regulation des Luftdurchsatzes durch Hinzufügung eines Korrekturfaktors k auf der Basis dieser Sauerstoffkonzentration ergänzt wird.

9. Anlage gemäß einem der Ansprüche 6 bis 8, **dadurch gekennzeichnet, dass** die Sensoren für die Konzentration an Nährstoffen (Kohlenstoff und/oder NH4) ISE-Sensoren sind.

**Claims**

1. Method of aerobic biological treatment of urban or industrial wastewater for the reduction of biodegradable carbonaceous matter and the oxidation of ammonium, process in which the water to be treated flows in plug flow between an inlet 2 and an outlet 3, and air supplies by nozzles 5 distributed along the length of the tank are distributed under the flow of water and are supplied by at least one source of air (A), the flow of this source being modulated according to at least one treatment parameter, the nutrient concentration (carbon and/or NH4) in the water to be treated being measured by a sensor (16) continuously at the inlet 2, the flow of the air supplies being modulated according to the measured nutrient concentration (carbon and/or NH4), and the nutrient concentration (carbon and/or NH4) in the water during treatment being measured by a sensor (16a) at a point in the course of the treatment, especially in the halfway of course of the treatment, so as to integrate the degree of elimination effectively achieved to modulate the air flow, wherein the air flow is calculated by a control unit 17 according to:

a formula (D1) taking into account the nutrient concentration(carbon and/or NH4) at the inlet of the plug flow NutrInlet and at a point of the treatment NutrCourse, particurlarly the halfway,

$$D1 \rightarrow Qair = Qmin + B\text{*}NutrInlet + C \text{ (}NutrCourse - E\text{*}NutrInlet\text{)}$$

with,

nutrient concentration in mg/l,

Qmin in $Nm^3/h$,

Qmin being between 2 and 6 $Nm^3/h/m^2$ * surface of aerated tank in $m^2$,

B in $Nm^3/h/mg/l$,

B being between 400 and 1000, advantageously equal to 700

C in $Nm^3/h/mg/l$,

C being between 150 and 600 in $Nm^3/h/mg/l$, according to the configuration, and

E being unitless and between 0.5 and 0.8,

or

a formula (D2) taking into account on the one hand the flow of air Qair-1, applied at the time t-1, and on the other hand the variation pNutrInlet in nutrient concentration (carbon and/or NH4) as a function of time, at the inlet of the plug flow, and the variation in the degree of nutrient elimination (carbon and/or NH4) over a point in the course, especially in the first halfway of the plug flow,

$$D2 \rightarrow Qair = Qair\text{-}1 + F*pNutrInlet + G*p(NutrCourse - E*NutrInlet)$$

with Qair-1 equal to the air flow applied at t-1 (t-1 minute),

pNutrInlet, the variation in nutrient concentration at the inlet of the plug flow,

p(NutrCourse - E*NutrInlet), the variation in the degree of nutrient reduction (carbon and/or NH4) at a point in the course, especially in the first halfway of the plug flow,

F in $Nm^3/h/mg/l/min$, F being between 6000 and 12 000, advantageously equal to 8000,

G in $Nm^3/h/mg/l/min$, G being between 1 and 10, advantageously equal to 5,

E being unitless and between 0.5 and 0.8,

the computation unit 17 sending in output 18 an instruction to a circuit 19 converting the information originating from the output 18 into a signal for controlling the regulation of the air supply in the nozzles 5 by a valve 8 or by the modulation of the flow from the source of air A.

**2.** Method as claimed in claim 1, wherein oxygen concentration in the water is measured 21 at the end of treatment and the regulation of the air flow is supplemented by adding a correction factor (k) based on the oxygen concentration.

**3.** Method as claimed in claim 2, wherein a range of oxygen concentration is determined (Oxyg min / Oxyg max) and when the measured value of the oxygen concentration is outside this range ($O_2$ measured > Oxyg max or $O_2$ measured < Oxy min), the air flow Qair calculated is corrected.

**4.** Method as claimed in any one of claims 1 and , the air flow (Qair) being calculated according to the formula (D1), wherein a correction factor of O.Ox is applied incrementally, especially to each measurement in which the concentration of $O_2$ measured < Oxygmin, O.Ox increment is added to the correction factor k, the air flow thus becoming

$$Qair = k\,[Qmin + B*NutrInlet + C(NutrCourse - E*NutrInlet)]$$

with initial k = 1

k being unitless

in the case in which $O_2$ measured > Oxyg max, the correction factor k is decremented by O.Ox.

**5.** Method as claimed in any one of claims 1 and 3, the air flow (Qair) being calculated according to the formula (D2), wherein a fixed correction factor is applied to each measurement of oxygen concentration, particularly to each measurement in which the concentration of $O_2$ measured < Oxyg min, a correction of (1+0.0x) is applied, and to each measurement in which $O_2$ measured > Oxyg max, a correction of (1-0.0x) is applied, the air flow thus becoming:

$$Qair = (1+0.0x)(or\ 1-0.0x)*[Qair\text{-}1 + F*pNutrInlet + G*p(NutrCourse - E*NutrInlet)]$$

with x being unitless.

6. A facility for the aerobic biological treatment of urban or industrial wastewater, the facility being for carrying out the method as claimed in claim 1 or 2 and comprising an aerobic pathway plug flow reactor for the reduction of biodegradable carbonaceous matter and the oxidation of nutrient (carbone and /or NH4) the water to be treated flowing between an inlet 2 and an outlet 3 and air supplies by nozzles distributed along the length of the tank, under the flow of water and supplied by at least one source of air (A), the flow of this source being modulated according to at least one treatment parameter, in which it comprises, at the inlet of the reactor/tank, a sensor (16) enabling continuous estimation of the nutrient concentration (carbon and/or NH4) in the water, and the computation unit (17) receiving the information from the sensor (16) and able to control the flow of the air supplies and comprising, over the course of the plug flow, in particular in the halfway, a sensor (16a) enabling continuous estimation of the nutrient concentration (carbon and/or NH4) in the water at this point in the course, the sensor (16a) being connected to the computation unit (17) so as to integrate the degree of elimination effectively achieved to modulate the air flow, the computation unit 17, outputting 18 an instruction sent to a circuit 19 converting the information originating from the output 18 into a signal for controlling the regulation of the air supply in the nozzles 5 by a valve 8 or by the modulation of the flow from the source of air A.

7. The facility as claimed in claim 6, wherein the computation unit 17 is programmed to calculate the air flow according to at least two formulae (D1 and D2).

8. The facility as claimed in any one of claim 6, comprising, at the outlet 3 of the plug flow, a probe 21 for measuring oxygen concentration in the water, this probe being connected to the control unit 17, in order for the regulation of the air flow to be supplemented by adding a correction factor (k) based on the oxygen concentration.

9. The facility as claimed in any one of claims 6 to 8, wherein the sensors for sensing the nutrient concentration (carbon and/or NH4) are ISE sensors.

FIG.1

Concentration
pollution

9

Entrée                                    Sortie

FIG.2

FIG.3

FIG. 4

FIG.5

FIG.6

FIG.7

FIG.8

# RÉFÉRENCES CITÉES DANS LA DESCRIPTION

**Documents brevets cités dans la description**

- US 2014069864 A
- US 2012305478 A